# EUROPÄISCHE PATENTSCHRIFT

(11) **EP 0 418 683 B1**
(45) Veröffentlichungstag und Bekanntmachung des Hinweises auf die Patenterteilung: **05.05.1993**
(21) Anmeldenummer: 90117348.4
(22) Anmeldetag: 08.09.1990
(51) Int. Cl.: C09C 1/00, C08K 3/22, C04B 14/30

(54) **Rutilmischphasenpigment-Mikrogranulate, Verfahren zu ihrer Herstellung sowie deren Verwendung**
Mixed phases containing rutile pigment microbeads, process for manufacturing them and their use
Microgranulés de pigment de rutile à phases mixtes, procédé de fabrication et utilisation

(30) Priorität: 21.09.1989 DE 3931417
(43) Veröffentlichungstag der Anmeldung: 27.03.1991
(73) Patentinhaber: BAYER AG, 51368 Leverkusen (DE)
(72) Erfinder: Rademachers, Jakob, Dr., D-4150 Krefeld 12 (DE); Höfs, Hans-Ulrich, Dr., D-4150 Krefeld 1 (DE); Räde, Dieter, Dr., D-4150 Krefeld 1 (DE)

(56) Entgegenhaltungen:
- DE-A- 2 936 746
- DE-A- 3 132 303
- FR-A- 2 405 983

## Beschreibung

Die vorliegende Erfindung betrifft Rutilmischphasenpigmente in Form von Mikrogranulaten, ihre Herstellung sowie deren Verwendung.

Unter Rutilmischphasenpigmente versteht man Buntpigmente, die durch Einbau farbiger Übergangselemente in das Kristallgitter des Rutils erhalten werden. Vornehmlich werden solche Metalle als Gastkomponente in das Wirtsgitter des Rutils eingebaut, deren Kationenradien in der Größenordnung des Titan(IV)-ion-Radius liegen. Weicht die Wertigkeit des einzubauenden Kations von der des Titanions, nämlich vier ab, so wird zum statistischen Valenzausgleich ein weiteres Kation mit anderer Wertigkeit zugesetzt. Größere Bedeutung haben in der technischen Herstellung die Nickel- und Chrom-Rutilmischphasenpigmente erlangt. Hierbei werden zum Wertigkeitsausgleich zu den farbgebenden Nickel- und Chromoxiden höherwertige Oxide, insbesondere Antimon-, seltener Niob- oder Wolframoxid, eingebaut (Ullmanns Encyklopädie der techn. Chemie, Verlag Chemie GmbH, Weinheim 1979, 4. Aufl., Bd. 18, S. 608).

Die Bildung der Mischphasenpigmente mit Rutilgitter wird durch Glühen von homogenen Mischungen aus Titandioxid als Wirtskomponente und den farbgebenden Gastkomponenten bei Temperaturen über 1.000°C bewirkt. Dabei können auch an Stelle oxidischer Gastkomponenten hitzeunbeständige Verbindungen der den Komponenten zugrunde liegenden Metalle mit Titandioxid, Titanhydroxid oder Titandioxid-Hydrat gemischt werden, die bei Erhitzen an der Luft in die entsprechenden Oxide übergehen, z.B. Hydrate, Hydroxide, Oxidhydroxide, Carbonate, Acetate, Nitrate oder Formiate.

Nach dem Kalzinierschritt werden die erhaltenen Pigmentklinker entweder naß vermahlen oder im trockenen Zustand auf die erforderliche Pigmentfeinheit gebracht. Zur Anwendung gelangen die fertigen Pigmente als feinste Pulver, die sich gut in Kunststoffen und anderen Bindemittelsystemen dispergieren lassen. Der Nachteil der bislang eingesetzten Rutilmischphasenpigmentpulver besteht darin, daß sie zum Stauben neigen, bei der Lagerung verklumpen können und schlecht dosierbar sind. Um diese Nachteile zu vermeiden, wird in der DE-A-3 132 303 vorgeschlagen, Granulate der Rutilmischphasenpigmente mit Durchmessern von 100 bis 600 µm durch thermische Rollgranulierung mit anschließender Siebung herzustellen.

Der Nachteil dieser Methode besteht in dem hohen Zusatz von 1 bis 15 Gew.-% Polyether oder Polyethylenglykole als Granulierhilfsmittel mit Erweichungspunkten zwischen 35 und 80°C, die je nach Anwendung störend wirken können.

Es ist allgemein bekannt, Mikrogranulate mit Durchmessern von 30 bis 600 µm durch Sprühtrocknen herzustellen. Hierbei werden normalerweise Granulate als poröse Mikrokugeln erhalten. Häufig treten auch Hohlkugeln auf. Diese haben den Nachteil, daß mit dem Pigment beim Dispergieren ungewollt Luft in die oft hochviskosen Bindemittelsysteme eingetragen wird.

Die Aufgabe der vorliegenden Erfindung besteht nun darin, Mikrogranulate zur Verfügung zu stellen, die die beschriebenen Nachteile nicht aufweisen. Sie sollen handhabungsstabil und gut in den verschiedenen Bindemitteln wie Pigmentpulver dispergierbar sein, ohne Luftbläschen einzubringen.

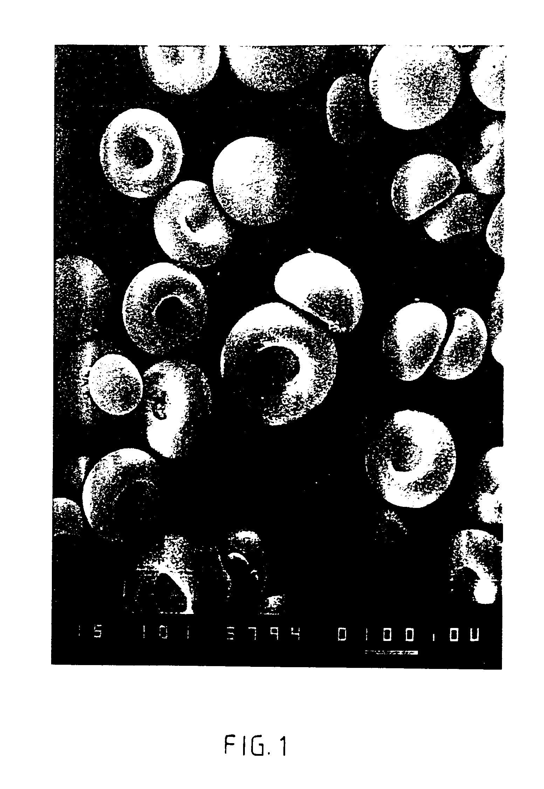

Diese Aufgabe wurde durch Rutilmischphasenpigment-Mikrogranulate gelöst, die in überwiegender Weise aus halbkugelartigen, einseitig abgeflachten und wulstartig nach innen eingezogenen Mikrogranulaten mit einer Granulatgröße von 30 bis 600 µm bestehen. Fig. 1 zeigt die erfindungsgemäßen Rutilmischphasenpigment-Mikrogranulate in 150-facher Vergrößerung.

Ähnliche Mikrogranulate sind auf dem Gebiet keramischer Materialien bekannt geworden (K. Masters Spray Drying, L. Hill Books, London, 1972, S. 26).

Auf dem Gebiet der Rutilmischphasenpigmente sind entsprechende Mikrogranulate bisher nicht beschrieben worden. Ein allgemeines Verfahren zur gezielten Herstellung solcher Granulate gibt es nicht. Vielmehr verhalten sich Suspensionen bei der Sprühgranuliertrocknung sehr unterschiedlich, ohne genaue Voraussagen treffen zu können. Möglichkeiten der sich bildenden Granulatformen sind auf den Seiten 306 und 307 von K. Masters: Spray Drying, L. Hill Books, London, 1972, aufgeführt.

Die erfindungsgemäßen Mikrogranulate sind praktisch staubfrei, genügend mechanisch stabil, sie verklumpen nicht und sind gut dosierbar. Ihre Verteilbarkeit in den verschiedensten Bindemittelsystemen ist überraschenderweise gleich gut wie die ungranulierten Pigmentpulver.

Die erfindungsgemäßen Mikrogranulate enthalten bevorzugt 0,1 bis 0,9 Gew.-% Bindemittel in Form von Natrium- oder Ammoniumpolyacrylat. Es hat sich gezeigt, daß die Fließfähigkeit und die Dispergierung in Kunststoffen durch Zusatz von Siliconölen günstig beeinflußt wird. Als Siliconöle kommen bevorzugt Polyorganohydrogensiloxane in Betracht. Aber auch Organopolysiloxane können eingesetzt werden. Insgesamt werden 0,1 bis 2,0 Gew.-%, auf Pigment bezogen, zugesetzt.

Die Herstellung der erfindungsgemäßen Rutilmischphasenpigment-Mikrogranulate erfolgt dadurch, daß eine wäßrige Pigmentsuspension mit 0,1 bis 0,9 Gew.-% Bindemittel in Form von Natrium- und/oder Ammoniumpolyacrylat und gegebenenfalls Siliconöl in Höhe von 0,1 bis 2,0 Gew.-%, jeweils auf Pigment bezogen, über eine Hohlkegeldüse bei Vordrucken von 2 bis 30 bar in einem Sprühturm verdüst und getrocknet wird.

Bei der Herstellung der wäßrigen Suspension geht man zweckmäßig von in der Pigmentfabrikation anfallenden Filterkuchen aus und gibt gegebenenfalls unter Zusatz von Wasser das Bindemittel und evtl. weitere Zusatzmittel wie Siliconöl unter intensivem Mischen hinzu. Steht das Pigment nur im trockenen Zustand zur Verfügung, erfolgt die Herstellung der Suspension durch Zusatz von Wasser und Bindemittel zum fertig gemahlenen Pigment.

Die Pigmentkonzentration schwankt in der erhaltenen Suspension je nach Pigmenttyp und Bindemittelzusatz zwischen 30 und 70 Gew.-%. Die Suspension muß für den nachfolgenden Granulierprozeß pump- und verdüsbar sein.

Die Sprühgranuliertrocknung erfolgt im Sprühturm. Im Fließbettsprühtrockner können die erfindungsgemäßen Pigmentmikrogranulate nicht erreicht werden. Hier fallen kugelförmige Agglomerate an. Das Verdüsen der Suspension erfolgt über eine Hohlkegeldüse. Diese Flüssigkeitsdruckdüse mit hohlkegelförmiger Sprühcharakteristik ist für die Herstellung der erfindungsgemäßen Mikrogranulate geeignet. Die Verwendung anderer Düsen, z.B. von Zweistoffdüsen, führt zu anderen Formen und Kornverteilungen der Mikrogranulate. Ebenfalls sind Zerstäuberscheiben ungeeignet.

Die Verwendung der erfindungsgemäßen Rutilmischphasenpigment-Mikrogranulate zum Einfärben von Kunststoffen, Lacken, Baustoffen, Email und Keramikglasuren ist ebenfalls Gegenstand der vorliegenden Erfindung. Es hat sich gezeigt, daß sowohl in der Dispergierbarkeit als auch in den koloristischen Eigenschaften keine Unterschiede zu entsprechend verwendeten Pigmentpulvern bestehen. Der Vorteil der erfindungsgemäßen Mikrogranulate besteht auch darin, daß sie beim Einarbeiten in die Matrix keine Luft mit einbringen, da sie überwiegend frei von geschlossenen Hohlkammern sind.

Das Verfahren der Erfindung soll an folgenden Beispielen näher erläutert werden. Es ist darin jedoch keine Einschränkung auf die Beispiele zu sehen.

### Beispiel 1

100 kg fertig gemahlenes Rutilmischphasenpigment Lichtgelb 6 R (Handelsprodukt der Bayer AG) werden mit 70 kg Wasser und 0,8 kg Dispex N 40 (Handelsprodukt der Allied Colloids Manufacturing GmbH) - entsprechend 0,32 kg Natriumpolyacrylat - homogen verrührt. Die so erhaltene Suspension wird mittels einer Schlauchpumpe in einer Menge von 36 kg pro Stunde einem Sprühtrockner zugeführt, der einen Durchmesser von 1,00 m bei einer zylindrischen Höhe von 5,20 m aufweist und mit einer Flüssigkeitsdruckdüse der Firma Gustav Schlick GmbH & Co (Typ 100, Bohrung 1,1 mm, Sprühwinkel 30° ) ausgerüstet ist. Der Flüssigkeitsdruck vor der Düse wird auf 3 bar gehalten. Die Temperaturen der Brennergase betragen am Trocknereintritt 520°C, am Trockneraustritt 180°C. Das erhaltene Trockengut besteht überwiegend aus wulstartig eingefallenen Halbkugeln mit Abmessungen von 200 bis 400 µm. Es weist gute Fließeigenschaften mit Auslaufzeiten aus dem 4 mm DIN-Becher in Höhe von 70 Sekunden auf (DIN 53 211 von April 1974). Die Dispergierbarkeit in Kunststoffen, gemessen anhand der Stippen-Anzahl in einer LD-PE-Blasfolie bei 1 % Pigment-Volumen-Konzentration und die Farbdaten, gemessen an extrudierten HD-PE-Plättchen bei einer Pigment-Volumen-Konzentration von 0,5 %, ergaben keine Unterschiede zu mit Pigment-Pulver eingefärbten Vergleichsproben.

### Beispiel 2

Filterkuchen aus der Produktion des Chrom-Antimon-haltigen Lichtgelbs 6 R (Handelsgut der Bayer AG) mit einem Feststoffgehalt von 65 Gew.-% wird wie in Beispiel 1 behandelt. Die erhaltenen Mikrogranulate zeigen keinen Unterschied zu den in Beispiel 1 erhaltenen Granulaten.

### Beispiel 3

Der wäßrigen, bindemittelhaltigen Pigment-Suspension wird 0,8 Gew.-%, auf Feststoff bezogen, Siliconöl Baysilone-Öl MH 15 (Handelsprodukt der Bayer AG) zugesetzt. Sonst wird verfahren wie in Beispiel 1, mit Ausnahme der Düsenbohrung, die 0,8 mm beträgt. Das erhaltene Mikrogranulat (Fig. 1) zeigt mit Abmessungen von 100 bis 250 µm eine verbesserte Fließfähigkeit von 50 Sekunden Auslaufzeit aus dem 4 mm DIN-Becher. Die anderen Eigenschaften blieben unverändert.

### Vergleichsbeispiel 1

Die wäßrige, mit Bindemittel versetzte Suspension aus Beispiel 3 wird einem Sprühtrockner zugeführt, der 2,90 m Durchmesser bei einer zylindrischen Höhe von 2,10 m aufweist und mit einer Zerstäuberscheibe bestückt ist, die mit einer Drehzahl von 16.400 Umdrehungen pro Minute betrieben wird. Bei Durchsatz von 200 kg Suspension pro Stunde werden kugelförmige Mikrogranulate mit Durchmessern von 50 bis 200 µm erhalten. Wulstartig eingefallene Halbkugeln werden nicht beobachtet.

### Vergleichsbeispiel 2

Zu 100 kg Lichtgelb 6 R (Handelsprodukt der Bayer AG) werden 180 kg Wasser gegeben und intensiv vermischt. Es entsteht eine viskose Paste, die nach Beispiel 1 im Sprühturm mit 18 kg pro Stunde verdüst wird. Das erhaltene Mikrogranulat besteht aus gut ausgebildeten Kügelchen mit Durchmessern von 50 bis 250 µm. Auch hier werden wulstartig eingefallene Halbkugeln nicht beobachtet.

## Patentansprüche

1. Frei fließende, nicht staubende und handhabungsstabile Rutilmischphasenpigment-Mikrogranulate, dadurch gekennzeichnet, daß sie in überwiegender Weise aus halbkugelartigen, einseitig abgeflachten und wulstartig nach innen eingezogenen Mikrogranulaten mit einer Granulatgröße von 30 bis 600 µm bestehen.

2. Rutilmischphasenpigment-Mikrogranulate gemäß Anspruch 1, dadurch gekennzeichnet, daß sie einen Bindemittelanteil in Höhe von 0,1 bis 0,9 Gew.-% Natrium- und/oder Ammoniumpolyacrylat enthalten.

3. Rutilmischphasenpigment-Mikrogranulate gemäß einem der Ansprüche 1 oder 2, dadurch gekennzeichnet, daß die Mikrogranulate als Dispergierhilfsmittel Siliconöle in Höhe von 0,1 bis 2,0 Gew.-% enthalten.

4. Verfahren zur Herstellung von Rutilmischphasenpigment-Mikrogranulaten gemäß einem oder mehreren der Ansprüche 1 bis 3, dadurch gekennzeichnet, daß eine wäßrige Pigmentsuspension mit 0,1 bis 0,9 Gew.-% Bindemittel in Form von Natrium- und/oder Ammoniumpolyacrylat und gegebenenfalls Siliconöl in Höhe von 0,1 bis 2,0 Gew.-%, jeweils auf Pigment bezogen, über eine Hohlkegeldüse bei Vordrucken von 2 bis 30 bar in einem Sprühturm verdüst und getrocknet wird.

5. Verwendung der Rutilmischphasenpigment-Mikrogranulate gemäß einem oder mehrerer der Ansprüche 1 bis 4 zum Einfärben von Kunststoffen, Lacken, Baustoffen, Email und Keramikglasuren.

## Claims

1. Free-flowing rutile mixed-phase pigment microgranules which do not emit dust and are stable to handling, characterized in that they consist predominantly of hemispherical microgranules flattened on one side and drawn inwards to form a bead and are between 30 and 600 µm in size.

2. Rutile mixed-phase pigment microgranules as claimed in claim 1, characterized in that they contain 0.1 to 0.9% by weight sodium and/or ammonium polyacrylate as binder.

3. Rutile mixed-phase pigment microgranules as claimed in claim 1 or 2, characterized in that the microgranules contain 0.1 to 2.0% by weight silicone oils as dispersion aids.

4. A process for the production of the rutile mixed-phase pigment microgranules claimed in one or more of claims 1 to 3, characterized in that an aqueous pigment suspension containing 0.1 to 0.9% by weight binder in the form of sodium and/or ammonium polyacrylate and, optionally, 0.1 to 0.9% by weight silicone oil, based in each case on pigment, is sprayed into a spraying tower through a hollow cone nozzle under pressures of 2 to 30 bar and dried.

5. The use of the rutile mixed-phase pigment microgranules claimed in one or more of claims 1 to 4 for pigmenting plastics, lacquers, building materials, enamels and ceramic glazes.

## Revendications

1. Microgranulés de pigment de rutile à phases mixtes s'écoulant librement, ne produisant pas de poussière et stables aux manipulations, caractérisés en ce qu'ils sont constitués principalement de microgranulés hémisphériques aplatis d'un côté et formant un bourrelet rentrant, ces granulés ayant un diamètre de 30 à 600 µm.

2. Microgranulés de pigment de rutile à phases mixtes suivant la revendication 1, caractérisés en ce qu'ils contiennent une proportion de liant à hauteur de 0,1 à 0,9 % en poids de polyacrylate de sodium et/ou d'ammonium.

3. Microgranulés de pigment de rutile à phases mixtes suivant l'une des revendications 1 et 2, caractérisés en ce qu'ils contiennent comme substances auxiliaires de dispersion des huiles de silicone à hauteur de 0,1 à 2,0 % en poids.

4. Procédé de production de microgranulés de pigment de rutile à phases mixtes suivant une ou plusieurs des revendications 1 à 3, caractérisé en ce qu'on atomise dans une tour de pulvérisation au moyen d'une buse à cône creux à des pressions d'alimentation de 2 à 30 bars, et on sèche, une suspension aqueuse de pigment contenant 0,1 à 0,9 % en poids de liant sous forme de polyacrylate de sodium et/ou d'ammonium et, le cas échéant, une huile de silicone à hauteur de 0,1 à 2,0 % en poids, dans chaque cas par rapport au pigment.

5. Utilisation des microgranulés de pigment de rutile à phases mixtes suivant une ou plusieurs des revendications 1 à 4 pour colorer des matières plastiques, des peintures, des matériaux de construction, un émail et des glaçures céramiques.
